# EUROPEAN PATENT SPECIFICATION

(11) **EP 4 255 717 B1**
(45) Date of publication and mention of the grant of the patent: **03.06.2026**
(21) Application number: 21823677.6
(22) Date of filing: 01.12.2021
(51) Int. Cl.: B29C 64/209, B33Y 30/00, B29C 48/02, B29C 48/025, B29C 48/05, B29C 48/25

(54) **AN EXTRUDING DEVICE FOR MAKING THREE-DIMENSIONAL OBJECTS**
EXTRUSIONSVORRICHTUNG ZUR HERSTELLUNG DREIDIMENSIONALER OBJEKTE
DISPOSITIF D'EXTRUSION MIS EN OEUVRE DANS LA FABRICATION D'OBJETS TRIDIMENSIONNELS

(30) Priority: 03.12.2020 IT 202000029777
(43) Date of publication of application: 11.10.2023
(73) Proprietor: Mark One S.r.l., 47521 Cesena (IT)
(72) Inventor: ZANI, Marco, Cesena (IT); IDA', Edoardo, Bologna (IT)
(74) Representative: Busca, Andrea
(86) International application number: PCT/IB2021/061158
(87) International publication number: WO 2022/118202

(56) References cited:
- DE-A1- 3 430 062
- US-A1- 2017 190 109
- US-B2- 7 604 470

## Description

### Technical field

This invention relates to an extruding device for making three-dimensional objects.

The device according to the invention allows three-dimensional objects to be made using a fused deposition additive manufacturing process.

### Background art

The use is known in this device of a first extrusion nozzle and a second extrusion nozzle each equipped with respective heating means.

An example of an extruding device with two extrusion nozzles is described into document US7604470B2, disclosing the preamble of claim 1.

The first extrusion nozzle and the second extrusion nozzle are moved vertically in such a way that only the nozzle positioned below is in the extrusion configuration and the one positioned above does not damage the material which is deposited by the lower one.

Generally, the first extruder and the second extruder are dedicated to the extrusion of respective materials different from each other in terms of physical and/or chemical properties.

Each extruder is associated with a respective feed unit which notoriously comprises a pair of shaped pulleys, a motor-driven pulley and an idle unit. The purpose of the feed unit is to pull a plastic filament inside a respective extruder through a heated nozzle.

The plastic filament, melting partially, is deposited by the extruder on a work surface.

As is known, the above-mentioned vertical movement of the first extruder and the second extruder is achieved by a single electric motor to which motion transmission means are connected.

The movement of each motor-driven pulley is controlled by respective electric motors.

### Aim of the invention

In this context, the need has been felt of reducing to a minimum the number of electric motors dedicated to moving the pair of extruders and the pair of motor-driven shaped pulleys to benefit from considerable advantages in terms of overall weight of the extruding device, since the weight of the electric motors determines a third of the overall weight of the extruding device, and to simplify the control of the drives of each electric motor since in the prior art it is necessary to synchronise the actuation of three electric motors different from each other.

In this context, an extruding device according to claim 1 is made for making three-dimensional objects comprising a frame for supporting a first extrusion head and a second extrusion head.

Each between the first extrusion head and the second extrusion head is configured to pass from a respective first non-operating position to a respective second operating position, and vice versa.

If the first extrusion head is positioned in the first non-operating position, the second extrusion head is positioned in the second operating position, and vice versa.

The extruding device comprises means for feeding a filament to be extruded.

The feed means comprise a motor-driven rotary unit, configured for selectively feeding the first extrusion head or the second extrusion head.

An actuator unit is connected to motion transmission means configured for translating the first extrusion head along a vertical direction from the first non-operating position to the second operating position and the second extrusion head from the second operating position to the first non-operating position, and vice versa, and for translating the rotary unit along a horizontal direction from the second extrusion head to the first extrusion head, and vice versa.

Advantageously, a single actuator unit performs three separate movements in synchrony, lightening the structure of the extruding device and the electronic control of the actuator simplifying the control.

### Brief description of the drawings

Further features and advantages of the invention are more apparent in the detailed description below, with reference to a preferred, non-limiting, embodiment of an extruding device for making three-dimensional objects as illustrated in the following drawings:

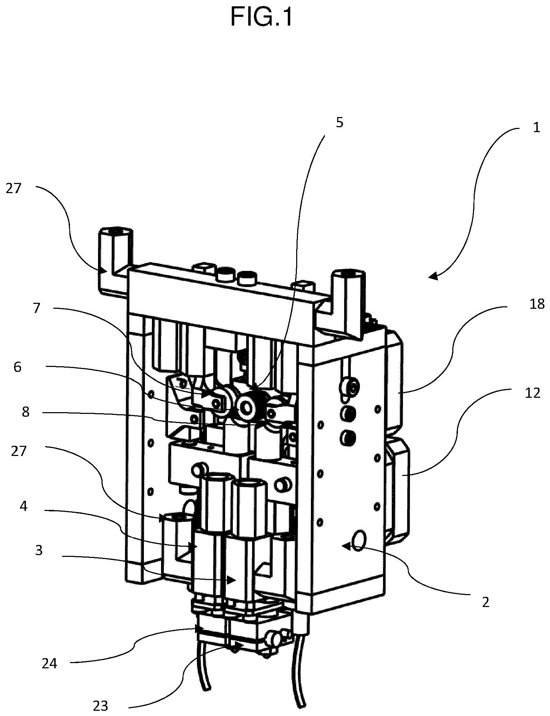

- Figure 1 is a schematic perspective view of an extruding according to the invention with some parts cut away in order to better illustrate others;
- Figure 2 is a schematic front view of the device of Figure 1 wherein a first extrusion head is positioned in an operating position;
- Figure 3 illustrates the device of Figure 2 with some parts cut away to better illustrate others;
- Figure 4 is a schematic front view of the device of Figure 1 wherein a second extrusion head is positioned in an operating position;
- Figure 5 illustrates the device of Figure 4 with some parts cut away to better illustrate others;

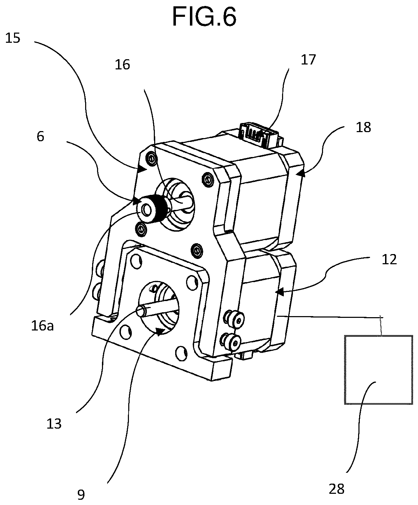

- Figure 6 illustrates a perspective view of a detail of the device of Figure 1.

### Detailed description of preferred embodiments of the invention

With reference to the accompanying drawings, the numeral 1 denotes an extruding device for making three-dimensional objects.

The device 1 comprises a frame 2 for supporting a first extrusion head 3 and a second extrusion head 4.

The first extrusion head 3 and the second extrusion head 4 each have a relative extrusion channel ending with a respective nozzle 23, 24.

The first extrusion head 3 and the second extrusion head 4 have respective heating means, not illustrated, positioned at the respective nozzle 23, 24.

Cooling means 27 are positioned along the extrusion channel above the respective nozzles 23, 24.

According to the embodiment described, the cooling means 27 comprise a plurality of ducts for circulating a cooling liquid.

Each between the first extrusion head 3 and the second extrusion head 4 is configured to pass from a respective first non-operating position to a respective second operating position, and vice versa.

If the first extrusion head 3 is positioned in the first non-operating position, the second extrusion head 4 is positioned in the second operating position, and vice versa.

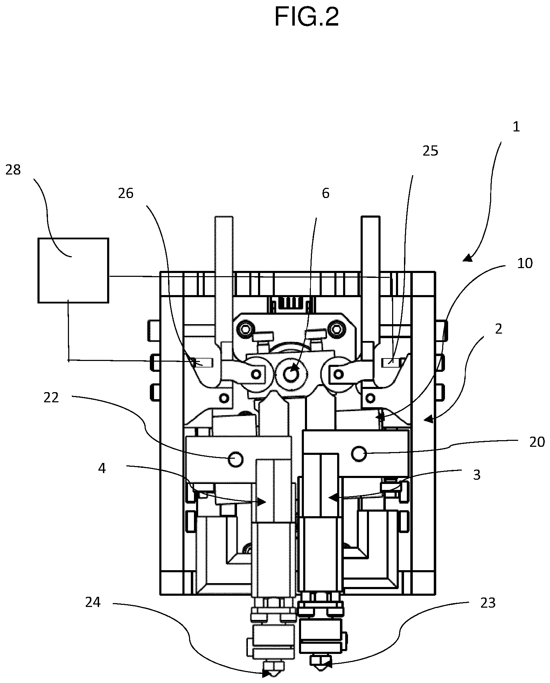

In Figure 2, in particular, the first extrusion head 3 is positioned in the first non-operating position and the second extrusion head 4 is positioned in the second operating position.

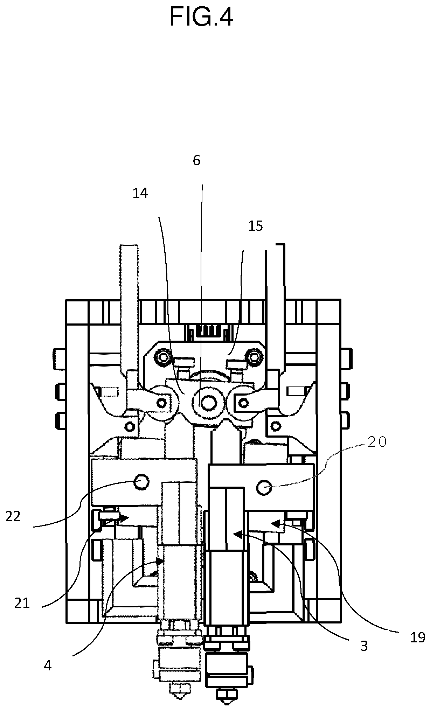

In Figure 4, in particular, the first extrusion head 3 is positioned in the second operating position and the second extrusion head 4 is positioned in the first non-operating position.

Each between the first extrusion head 3 and the second extrusion head 4 is configured to pass from a respective first non-operating position to a respective second operating position, and vice versa, according to a movement along a vertical direction.

More specifically, the first operating position corresponds to a height greater than the height of the second operating position.

In this way, during operation of one of either the first extrusion head 3 or the second extrusion head 4, the other does not interfere, damaging the material being extruded.

The extruding device 1 comprises means 5 for feeding a filament to be extruded for selectively feeding the first extrusion head 3 or the second extrusion head 4.

The feed means 5 comprise a motor-driven rotary unit 6 and a first contact element 7 associated with the first extrusion head 3 and a second contact element 8 associated with the second extrusion head 4.

The first contact element 7 and the second contact element 8 are idle elements.

According to the embodiment described, the rotary unit 6 is in the form of a shaped and toothed pulley.

According to the embodiment described, the first contact element 7 and the second contact element 8 are in the form of a shaped pulley.

The motor-driven rotary unit 6 is configured to be selectively movable between the first extrusion head 3 and the second extrusion head 4 in such a way as to feed the filament to the extrusion head positioned in the second operating position.

In order to selectively feed the filament to the first extrusion head 3 and to the second extrusion head 4, the motor-driven rotary unit 6 translates along a horizontal feed direction.

For example, with reference to the first extrusion head 3, during the passage from the first non-operating position to the second operating position, the rotary unit 6 of the feed means 5 translates from the second extrusion head 4 to the first extrusion head 3.

Simultaneously, the second extrusion head 4 passes from the second operating position to the first non-operating position.

According to the invention, a single actuator unit 9 is connected to motion transmission means 10 configured for translating the first extrusion head 3 along a vertical direction from the first non-operating position to the second operating position and the second extrusion head 4 from the second operating position to the first non-operating position, and vice versa, and for translating the rotary unit 6 along a horizontal direction from the second extrusion head 4 to the first extrusion head 3, and vice versa.

The transmission means 10 comprise a first body 11 configured to oscillate about an axis of oscillation 11a from a first end of stroke position to a second end of stroke position, and vice versa.

In other words, the first body 11 forms a crank.

The first end of stroke position of the first body 11 corresponds to the positioning of the first extrusion head 3 in the first non-operating position, of the second extrusion head 4 in the second operating position and the rotary unit 6 at the second extrusion head 4.

The second end of stroke position of the first body 11 corresponds to the positioning of the first extrusion head 3 in the second operating position, of the second extrusion head 4 in the first non-operating position and the rotary unit 6 at the first extrusion head 3.

The actuator unit 9 is connected to the first body 11 for moving it about the axis of oscillation 11a from the first end of stroke position to the second end of stroke position, and vice versa.

The actuator unit 9 comprises a motor body 12 and a drive shaft 13 for transmitting motion, rotating about a relative axis of rotation 13a.

According to the embodiment described, the axis of oscillation 11a of the first body 11 coincides with the axis of rotation 13a of the drive shaft 13.

The transmission means 10 comprise a second body 14 connected to the first body 11 in such a way as to translate relative to it towards or away from it.

In other words, the first body 11 and the second body 14 are connected to each other by a prismatic coupling.

The transmission means 10 comprise a third body 15 connected to a part of the supporting frame 2 in such a way as to translate relative to it towards or away from it.

In other words, the third body 15 and the supporting frame 2 are connected to each other by a prismatic coupling.

An actuator element 16 of the rotary unit 6, constrained integrally to the third body 15, is connected to the second body 14 in such a way as to rotate relative to it.

In other words, the actuator element 16 is connected to the second body 14 by a rotary coupling.

The actuator element 16 is in the form of a drive shaft which rotates about its axis of rotation 16a.

An actuator unit 17 of the actuator element 16 is connected to the third body 15 which defines a supporting body for the actuator unit 17 itself.

The drive element 17 comprises a motor body 18. The prismatic coupling between the second body 14 and the first body 11, the rotary coupling between the actuator element 16 and the second body 14, and the prismatic coupling between the third body 15 and the supporting frame 1 define a so-called oscillating glyph kinematic mechanism.

In use, the oscillation movement of the first body 11 corresponds to a translation of the rotary unit 6 from the first extrusion head 3 to the second extrusion head 4 along a horizontal direction.

The transmission means 10 comprise a fourth body 19 connected to the first body 11 in such a way as to translate relative to it towards or away from it.

In other words, the first body 11 and the fourth body 19 are connected to each other by a prismatic coupling.

An element 20 for connecting the fourth body 19 with the first extrusion head 3 is constrained to the fourth body 19 in such a way as to rotate relative to it.

In other words, the connecting element 20 is connected to the fourth body 19 by a rotary coupling.

The first extrusion head 3 is connected to the supporting frame 2 in such a way as to translate relative to it along a vertical direction.

In other words, the first extrusion head 3 and the supporting frame 2 are connected to each other by a prismatic coupling.

The prismatic coupling between the fourth body 19 and the first body 11, the rotary coupling between the connecting element 20 and the fourth body 19, and the prismatic coupling between the first extrusion head 3 and the supporting frame 2 define a so-called oscillating glyph kinematic mechanism.

In use, the oscillation movement of the first body 11 corresponds to a translation of the first extrusion head 3 along a vertical direction.

The transmission means 10 comprise a fifth body 21 connected to the first body 11 in such a way as to translate relative to it towards or away from it. In other words, the first body 11 and the fifth body 21 are connected to each other by a prismatic coupling.

An element 22 for connecting the fifth body 21 with the second extrusion head 4 is constrained to the fifth body 21 in such a way as to rotate relative to it.

In other words, the connecting element 22 is connected to the fifth body 21 by a rotary coupling.

The second extrusion head 4 is connected to the supporting frame 2 in such a way as to translate relative to it along a vertical direction.

In other words, the second extrusion head 4 and the supporting frame 2 are connected to each other by a prismatic coupling.

The prismatic coupling between the fifth body 21 and the first body 11, the rotary coupling between the connecting element 22 and the fifth body 21, and the prismatic coupling between the second extrusion head 4 and the supporting frame 2 define a so-called oscillating glyph kinematic mechanism.

In use, the oscillation movement of the first body 11 corresponds to a translation of the second extrusion head 4 along a vertical direction.

According to the embodiment described, the prismatic couplings are obtained by using screws with straight collar and bushings and the rotary couplings are made by means of bushings inserted in respective housings. It should be noted that the second body 14, the fourth body 19 and the fifth body 21 are connected to the first body 11.

More specifically, the second body 14, the fourth body 19 and the fifth body 21 are connected to the first body 11 in such a way that the second body 14 is positioned at an angular distance of 90° from the fourth body 19 and at an angular distance of 90° from the fifth body 21.

In use, at the oscillation movement of the first body 11 from the first end of stroke position to the second end of stroke position, and vice versa, the first body 11 simultaneously pulls the second body 14, the fourth body 19 and the fifth body 21 connected to it.

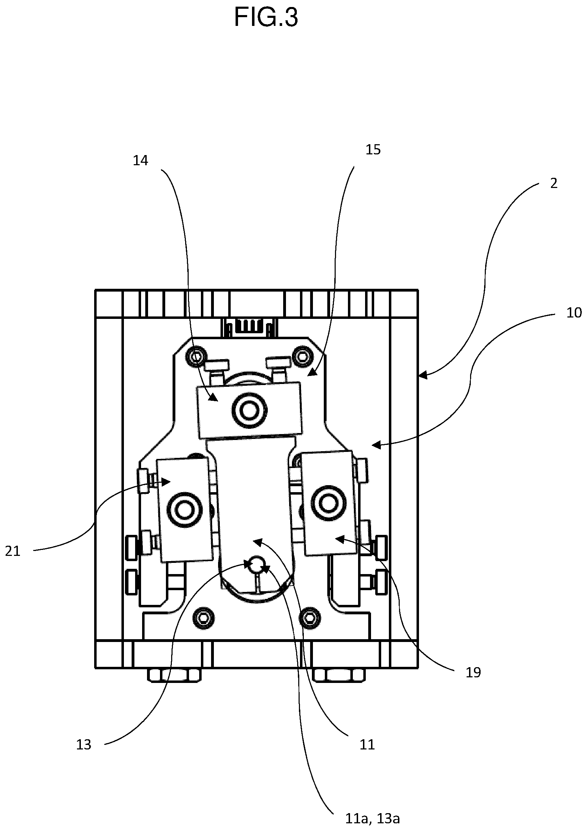

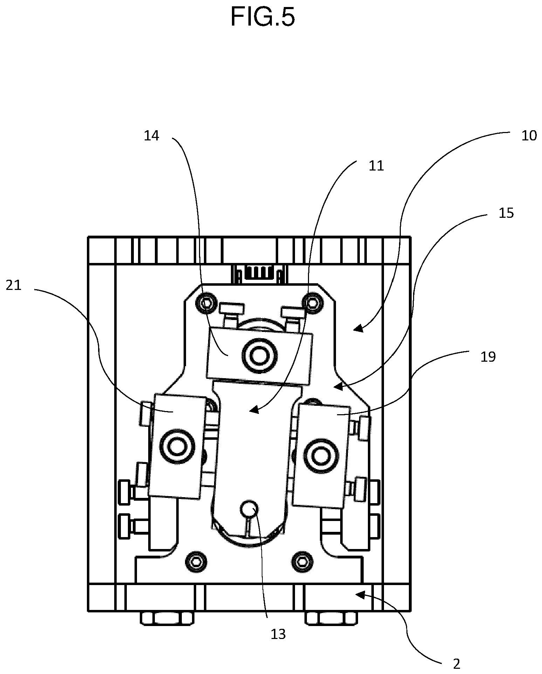

Each second body 14, the fourth body 19 and the fifth body 21 is part of a respective oscillating glyph kinematic mechanism, so that the oscillation of the first body 11 corresponds to the simultaneous movement of the first extrusion head 3 from the first non-operating position to the second operating position, of the second extrusion head 4 from the second operating position to the first non-operating position and of the rotary unit 6 from the second extrusion head to the first extrusion head, and vice versa, as shown in Figures 3 and 5.

Advantageously, the invention makes it possible to obtain a compact and lightweight system having reduced with respect to the prior art the number of actuators designed for the movements of the pair of extruders and the means for feeding the filament and having designed an oscillating glyph kinematic transmission.

The device 1 comprises a first sensor 25 for detecting the position of the first contact element 7 and a second sensor 26 for detecting the position of the second contact element 8.

A control unit 28 is configured to control the actuator unit 9 in such a way as to define the first end of stroke position and the second end of stroke position after receiving a detection signal from the first sensor 25 and a detection signal from the second sensor 26.

## Claims

1. An extruding device for making three-dimensional objects comprising a frame (2) for supporting a first extrusion head (3) and a second extrusion head (4), wherein
each between the first extrusion head (3) and the second extrusion head (4) is configured to pass from a respective first non-operating position to a respective second operating position, and vice versa;
if the first extrusion head (3) is positioned in the first non-operating position, the second extrusion head (4) is positioned in the second operating position, and vice versa;
the extruding device (1) comprises means (5) for feeding a filament to be extruded;
the feed means (5) comprise a motor-driven rotary unit (6), configured for selectively feeding the first extrusion head (3) or the second extrusion head (4);
an actuator unit (9) is connected to motion transmission means (10) configured for translating the first extrusion head (3) along a vertical direction from the first non-operating position to the second operating position and the second extrusion head (4) from the second operating position to the first non-operating position, and vice versa, and for translating the rotary unit (6) along a horizontal direction from the second extrusion head (4) to the first extrusion head (3), and vice versa;
**characterised in that** the transmission means (10) comprise a first body (11) configured to oscillate about an axis of oscillation (11a) from a first end of stroke position to a second end of stroke position, and vice versa; the actuator unit (9) is connected to the first body (11) for moving it about the axis of oscillation (11a); the transmission means (10) comprise three oscillating glyph kinematic mechanisms controlled by the first body (11); a first oscillating glyph kinematic mechanism is configured for moving the first extrusion head (3), a second oscillating glyph kinematic mechanism is configured for moving the second extrusion head (4) and a third oscillating glyph kinematic mechanism is configured for moving the rotary unit (6).

2. The device according to claim 1, **characterised in that** the transmission means (10) comprise a second body (14) connected to the first body (11) in such a way as to translate relative to it towards or away from it; the transmission means (10) comprise a third body (15) connected to the supporting frame (2) in such a way as to translate relative to it towards or away from it; an actuator element (16) of the rotary unit (6), constrained integrally to the third body (15), is connected to the second body (14) in such a way as to rotate relative to it.

3. The device according to claim 2, **characterised in that** the actuator element (16) is in the form of a drive shaft which rotates about its axis of rotation (16a); an actuator unit (17) of the actuator element (16) is connected to the third body (15) which defines a supporting body for the actuator unit (17) itself.

4. The device according to any one of claims 1 to 3, **characterised in that** the transmission means (10) comprise a fourth body (19) connected to the first body (11) in such a way as to translate relative to it towards or away from it; an element (20) for connecting the fourth body (19) with the first extrusion head (3) is constrained to the fourth body (19) in such a way as to rotate relative to it; the first extrusion head (3) is connected to the supporting frame (2) in such a way as to translate relative to it along a vertical direction.

5. The device according to any one of claims 1 to 4, **characterised in that** the transmission means (10) comprise a fifth body (21) connected to the first body (11) in such a way as to translate relative to it towards or away from it; an element (22) for connecting the fifth body (21) with the second extrusion head (4) is constrained to the fifth body (21) in such a way as to rotate relative to it; the second extrusion head (4) is connected to the supporting frame (2) in such a way as to translate relative to it along a vertical direction.

6. The device according to claim 1, **characterised in that** the feed means (5) comprise a first contact element (7) of the rotary unit (6) associated with the first extrusion head (3) and a second contact element (8) of the rotary unit (6) associated with the second extrusion head (4); the device (1) comprises a first sensor (25) for detecting the position of the first contact element (7) and a second sensor (26) for detecting the position of the second contact element (8);
a control unit (28) is configured to control the actuator unit (9) in such a way as to define the first end of stroke position and the second end of stroke position after receiving a detection signal from the first sensor (25) and a detection signal from the second sensor (26).

7. A machine for making three-dimensional objects comprising an extruding device (1) according to any one of claims 1 to 6 configured for feeding filaments of material on a work surface.

## Patentansprüche

1. Extrusionvorrichtung zur Herstellung dreidimensionaler Gegenstände umfassend einen Rahmen (2) zum Tragen eines ersten Extrusionskopfes (3) und eines zweiten Extrusionskopfes (4) umfasst, wobei
jeder zwischen dem ersten Extrusionskopf (3) und dem zweiten Extrusionskopf (4) dazu konfiguriert ist, von einer jeweiligen ersten Nichtbetriebsstellung in eine jeweilige zweite Betriebsstellung zu wechseln und umgekehrt;
wenn der erste Extrusionskopf (3) in der ersten Nichtbetriebsstellung positioniert ist, der zweite Extrusionskopf (4) in der zweiten Betriebsstellung positioniert ist und umgekehrt;
die Extrusionvorrichtung (1) Mittel (5) zum Vorschieben eines Fadens, der extrudiert werden muss;
die Vorschubmittel (5) eine motorgetriebene Dreheinheit (6) umfassen, die dazu konfiguriert ist, selektiv den ersten Extrusionskopf (3) oder den zweiten Extrusionskopf (4) vorzuschieben;
eine Antriebseinheit (9) mit Bewegungsübertragungsmitteln (10) verbunden ist, die dazu konfiguriert sind, den ersten Extrusionskopf (3) entlang einer vertikalen Richtung von der ersten Nichtbetriebsposition in die zweite Betriebsposition und den zweiten Extrusionskopf (4) von der zweiten Betriebsposition in die erste Nichtbetriebsposition und umgekehrt zu verschieben, und die Dreheinheit (6) entlang einer horizontalen Richtung von dem zweiten Extrusionskopf (4) zu dem ersten Extrusionskopf (3) und umgekehrt zu verschieben;
**dadurch gekennzeichnet, dass** die Übertragungsmittel (10) einen ersten Körper (11) umfassen, der dazu konfiguriert ist, um eine Schwingungsachse (11a) von einer ersten Anschlagsstellung zu einer zweiten Anschlagsstellung und umgekehrt zu schwingen; die Antriebseinheit (9) mit dem ersten Körper (11) verbunden ist, um ihn um die Schwingungsachse (11a) zu bewegen; die Übertragungsmittel (10) drei schwingende Glyph kinematische Mechanismen umfassen, die durch den ersten Körper (11) gesteuert werden; ein erster schwingender Glyph kinematischer Mechanismus dazu konfiguriert ist, den ersten Extrusionskopf (3) zu bewegen, ein zweiter schwingender Glyph kinematischer Mechanismus dazu konfiguriert ist, den zweiten Extrusionskopf (4) zu bewegen und ein dritter schwingender Glyph kinematischer Mechanismus dazu konfiguriert ist, die Dreheinheit (6) zu bewegen.

2. Vorrichtung nach Anspruch 1, **dadurch gekennzeichnet, dass** die Übertragungsmittel (10) einen zweiten Körper (14) umfassen, der mit dem ersten Körper (11) verbunden ist, um sich in Bezug auf ihn zu oder weg von ihm zu verschieben; die Übertragungsmittel (10) einen dritten Körper (15) umfassen, der mit dem Tragrahmen (2) verbunden ist, um in Bezug auf ihn zu oder weg von ihm zu verschieben; ein Antriebselement (16) der Dreheinheit (6), das einstückig an dem dritten Körper (15) befestigt wird, mit dem zweiten Körper (14) verbunden ist, um sich in Bezug auf ihn zu drehen.

3. Vorrichtung nach Anspruch 2, **dadurch gekennzeichnet, dass** das Antriebselement (16) als Antriebswelle ausgebildet ist, die um ihre Drehachse (16a) dreht; eine Antriebseinheit (17) des Antriebselements (16) mit dem dritten Körper (15) verbunden ist, der einen Tragkörper für die Antriebseinheit (17) selbst definiert.

4. Vorrichtung nach einem der Ansprüche 1 bis 3, **dadurch gekennzeichnet, dass** die Übertragungsmittel (10) einen vierten Körper (19) umfassen, der mit dem ersten Körper (11) verbunden ist, um sich in Bezug auf ihn zu oder weg von ihm zu verschieben; ein Element (20) zum Verbinden des vierten Körpers (19) mit dem ersten Extrusionskopf (3) an dem vierten Körper (19) befestigt wird, um sich in Bezug auf ihn zu drehen; der erste Extrusionskopf (3) mit dem Tragrahmen (2) verbunden ist, um sich in Bezug auf ihn in einer vertikalen Richtung zu verschieben.

5. Vorrichtung nach einem der Ansprüche 1 bis 4, **dadurch gekennzeichnet, dass** die Übertragungsmittel (10) einen fünften Körper (21) umfassen, der mit dem ersten Körper (11) verbunden ist, um sich in Bezug auf ihn zu oder weg von ihm zu verschieben; ein Element (22) zum Verbinden des fünften Körpers (21) mit dem zweiten Extrusionskopf (4) an dem fünften Körper (21) befestigt wird, um sich in Bezug auf ihn zu drehen; der zweite Extrusionskopf (4) mit dem Tragrahmen (2) verbunden ist, um sich in Bezug auf ihn in einer vertikalen Richtung zu verschieben.

6. Vorrichtung nach Anspruch 1, **dadurch gekennzeichnet, dass** die Vorschubmittel (5) ein erstes Kontaktelement (7) der Dreheinheit (6), das dem ersten Extrusionskopf (3) zugeordnet ist, und ein zweites Kontaktelement (8) der Dreheinheit (6), das dem zweiten Extrusionskopf (4) zugeordnet ist, umfassen; die Vorrichtung (1) einen ersten Sensor (25) zur Erfassung der Stellung des ersten Kontaktelements (7) und einen zweiten Sensor (26) zur Erfassung der Stellung des zweiten Kontaktelements (8) umfasst;
eine Steuereinheit (28), die dazu konfiguriert ist, die Antriebseinheit (9) zu steuern, um die erste Anschlagsstellung und die zweite Anschlagsstellung zu definieren, nach dem Empfangen eines Erfassungssignals von dem ersten Sensor (25) und eines Erfassungssignals von dem zweiten Sensor (26).

7. Maschine zur Herstellung dreidimensionaler Gegenstände, umfassend eine Extrusionvorrichtung (1) nach einem der Ansprüche 1 bis 6, die zum Vorschieben von Materialfäden auf eine Arbeitsfläche ausgebildet ist.

## Revendications

1. Dispositif d'extrusion pour la fabrication d'objets tridimensionnels comprenant un cadre (2) pour supporter une première tête d'extrusion (3) et une seconde tête d'extrusion (4), dans lequel
la première tête d'extrusion (3) et la seconde tête d'extrusion (4) sont chacune configurées pour passer d'une première position de non fonctionnement à une seconde position de fonctionnement, et vice versa ;
si la première tête d'extrusion (3) est placée dans la première position de non fonctionnement, la seconde tête d'extrusion (4) est placée dans la seconde position de fonctionnement, et vice versa ;
le dispositif d'extrusion (1) comprend des moyens (5) pour alimenter un filament à extruder ;
les moyens d'alimentation (5) comprennent une unité rotative motorisée (6), configurée pour alimenter sélectivement la première tête d'extrusion (3) ou la seconde tête d'extrusion (4) ;
une unité d'actionnement (9) est reliée à des moyens de transmission de mouvement (10) configurés pour déplacer la première tête d'extrusion (3) le long d'une direction verticale de la première position de non fonctionnement à la seconde position de fonctionnement et la seconde tête d'extrusion (4) de la seconde position de fonctionnement à la première position de non fonctionnement, et vice versa, et pour déplacer l'unité rotative (6) le long d'une direction horizontale de la seconde tête d'extrusion (4) à la première tête d'extrusion (3), et vice versa ;
**caractérisé en ce que** les moyens de transmission (10) comprennent un premier corps (11) configuré pour osciller autour d'un axe d'oscillation (11a) d'une première position de fin de course à une seconde position de fin de course, et vice versa ; l'unité actionneur (9) est reliée au premier corps (11) pour le déplacer autour de l'axe d'oscillation (11a) ; les moyens de transmission (10) comprennent trois mécanismes cinématiques à glyphe oscillant commandés par le premier corps (11) ; un premier mécanisme cinématique à glyphe oscillant est configuré pour déplacer la première tête d'extrusion (3), un deuxième mécanisme cinématique à glyphe oscillant est configuré pour déplacer la seconde tête d'extrusion (4) et un troisième mécanisme cinématique à glyphe oscillant est configuré pour déplacer l'unité rotative (6).

2. Dispositif selon la revendication 1, **caractérisé en ce que** les moyens de transmission (10) comprennent un deuxième corps (14) relié au premier corps (11) de manière à se rapprocher ou à s'éloigner de lui ; les moyens de transmission (10) comprennent un troisième corps (15) relié au cadre de support (2) de manière à se rapprocher ou à s'éloigner de lui ; un élément actionneur (16) de l'unité rotative (6), contraint intégralement au troisième corps (15), est relié au deuxième corps (14) de manière à tourner par rapport à lui.

3. Dispositif selon la revendication 2, **caractérisé en ce que** l'élément actionneur (16) se présente sous la forme d'un arbre d'entraînement qui tourne autour de son axe de rotation (16a) ; une unité actionneur (17) de l'élément actionneur (16) est reliée au troisième corps (15) qui définit un corps de support pour l'unité actionneur (17) elle-même.

4. Dispositif selon l'une quelconque des revendications 1 à 3, **caractérisé en ce que** les moyens de transmission (10) comprennent un quatrième corps (19) relié au premier corps (11) de manière à se rapprocher ou à s'éloigner de lui par rapport à lui ; un élément (20) de liaison entre le quatrième corps (19) et la première tête d'extrusion (3) est contraint au quatrième corps (19) de manière à tourner par rapport à lui ; la première tête d'extrusion (3) est reliée au cadre de support (2) de manière à se déplacer par rapport à lui selon une direction verticale.

5. Dispositif selon l'une quelconque des revendications 1 à 4, **caractérisé en ce que** les moyens de transmission (10) comprennent un cinquième corps (21) relié au premier corps (11) de manière à se rapprocher ou à s'éloigner de lui par rapport à lui ; un élément (22) de liaison entre le cinquième corps (21) et la seconde tête d'extrusion (4) est contraint au cinquième corps (21) de manière à tourner par rapport à lui ; la seconde tête d'extrusion (4) est reliée au cadre de support (2) de manière à se déplacer par rapport à lui selon une direction verticale.

6. Dispositif selon la revendication 1, **caractérisé en ce que** les moyens d'alimentation (5) comprennent un premier élément de contact (7) de l'unité rotative (6) associé à la première tête d'extrusion (3) et un second élément de contact (8) de l'unité rotative (6) associé à la seconde tête d'extrusion (4) ; le dispositif (1) comprend un premier capteur (25) pour détecter la position du premier élément de contact (7) et un second capteur (26) pour détecter la position du second élément de contact (8) ;
une unité de commande (28) est configurée pour commander l'unité actionneur (9) de manière à définir la première position de fin de course et la seconde position de fin de course après avoir reçu un signal de détection du premier capteur (25) et un signal de détection du second capteur (26).

7. Machine pour la fabrication d'objets tridimensionnels comprenant un dispositif d'extrusion (1) selon l'une quelconque des revendications 1 à 6, configuré pour alimenter des filaments de matériau sur une surface de travail.
